# EUROPEAN PATENT APPLICATION

(11) **EP 4 802 904 A1**
(43) Date of publication of application: **09.09.2026**
(21) Application number: 24885074.5
(22) Date of filing: 04.11.2024
(51) Int. Cl.: A23L 27/50, A23L 27/24

(54) **METHOD FOR PRODUCING A SAUCE SIMILAR TO SOY SAUCE**

(30) Priority: 02.11.2023 ES 202330898
(71) Applicant: Agro Sevilla Aceitunas, S. Coop. And, 41020 Sevilla (Sevilla) (ES); Taller De Ideación culinaria, S.L., 14420 Villafranca de Córdoba (Córdoba) (ES)
(72) Inventor: FERNANDEZ GINES, Jose Maria, 41590 La Roda de Andalucía (Sevilla) (ES); NAVAS HUMANES, Jose Maria, 41590 La Roda de Andalucía (Sevilla) (ES); ARROYO LÓPEZ, Francisco Noé, 41510, 41510 Mairena del Alcor (ES); RUIZ ÁLVAREZ, Juan José, 14420 Villafranca de Córdoba (ES)
(74) Representative: Jiménez Diaz, Rafael
(86) International application number: PCT/ES2024/070683
(87) International publication number: WO 2025/093802

(57) **Abstract**

The present invention relates to a method for producing a cooking sauce from green table olive fermentation brine, preferably treated with an alkali. The brine used as the basis of the method must contain lactic acid bacteria and yeast, a salt content between 6.5-8.5%, a pH between 3.7-4.3, a free acidity of 1.0-1.3% and a combined acidity of 0.10-0.25 mEq. The method also consists of having fermented the olives for a long period of time, for example, between 3-18 months. Using this brine, the method comprises the following steps: filtering the fermentation brine to remove impurities; adding powdered yeast extracts to provide an *umami* flavour; adding plant extracts to obtain a colour and viscosity similar to soy sauce; adding a thickening agent to prevent the powdered yeast extract from separating from the rest of the brine; and packaging and pasteurising the resulting sauce.

## Description

### OBJECT OF THE INVENTION

The present invention pertains to the field of agrifood.

The object of the present invention is to develop a working method for obtaining a novel culinary sauce similar to soy sauce but obtained from green olive fermentation brine.

### BACKGROUND OF THE INVENTION

Soy sauce, or shoyu in Japanese, is a condiment of Chinese origin that is produced by fermenting soybeans with fungi such as *Aspergillus oryzae* or *Aspergillus sojae,* together with halophilic bacteria and yeasts. Over the centuries, soy sauce has been a key element in the gastronomy of east and southeast Asia, appreciated for its unique taste and culinary versatility. It is characterized by being a brown or black salty liquid that is a cornerstone of east Asian and Japanese cuisine and is used in a wide variety of dishes.

The fermentation process of soy sauce is a two-stage process that can last from several months to 4 years. The principal steps of the soy sauce fermentation process are detailed below:
1. Preparation of the ingredients: The principal ingredients of soy sauce are soybeans, cereals (wheat or barley), water, and salt.
2. The soybeans are soaked in water and steamed. They are then mixed with the cereals and roasted.
3. Koji production: The first stage of fermentation involves the production of koji, which is a solid mixture of soybeans and cereals inoculated with fungi such as *Aspergillus oryzae* or *Aspergillus sojae.*
4. The koji is left to ferment aerobically for several days until a paste has formed.
5. Moromi production: The second stage of fermentation involves the production of moromi, which is a liquid mixture of koji, water, and salt. The moromi is left to ferment for a period of several months to more than 4 years in large wooden barrels. During this time, it is mixed and stirred regularly to ensure uniform fermentation, which is carried out by yeasts and lactic acid bacteria resistant to high salt concentrations.
6. Filtering and pasteurization: After several months, the moromi is filtered to separate the liquid soy sauce from the solids. The liquid soy sauce is pasteurized to stop the fermentation and to kill any bacteria or fungi present in the sauce.

Soy sauce has high nutritional value, since it is low in saturated fats and rich in fatty acids, high-quality proteins, vitamins B and E, iron, calcium, phosphorus, potassium, and zinc. It also contains isoflavones, which act as antioxidants and aid the elimination of toxins from the body.

However, it is important to note that some varieties of soy sauce can contain high levels of sodium (13-20%) and also a high calorie content (50-100 kcal per 100 grams), so should be consumed in moderation. Moreover, in recent years soybean cultivation has also been beset by environmental problems due to the deforestation that results from the increasing areas under cultivation and to the use of transgenic plants. In addition, both wheat and soya itself are known to have an allergic component due to their gluten content.

Spanish patent ES2933106 describes a method for producing a fermented sauce that is similar to soy sauce but has the advantages of a lower sodium content, fewer calories, being gluten-free, and a production process having lower environmental impact through the reuse of olive fermentation brines. Thus, the first solid fermentation employs microorganisms such as *Aspergillus oryzae,* releasing essential amino acids and carbohydrates from chickpeas and rice. The subsequent second fermentation uses microorganisms with high technological and probiotic potential (*L. pentosus, S. cerevisiae* and *W*. *anomalus*), and the brines from olive production provide compounds such as polyphenols that are present after contact with olives. The process ends with aging in barrels and/or casks to round off its organoleptic profile. The result is a sauce rich in protein, amino acids, vitamins, mineral salts, and antioxidants of plant origin (hydroxytyrosol) that has half the sodium content, fewer calories, and also does not contain gluten.

### DESCRIPTION OF THE INVENTION

The inventors of the present application have developed a method for obtaining a novel culinary sauce similar to soy sauce from the fermentation brine of green table olives. That is to say, the sauce of the present invention does not contain soya or wheat (as present in traditional soy sauce) nor does it contain chickpeas or rice (as present in the fermented sauce of Spanish patent ES2933106), but uses as sole raw material the fermentation brines of green olives.

The fermentation brines of green olives are currently regarded as nothing more than waste from the production of table olives. It is estimated that, in Spain alone, some 300 million liters of brines are generated annually, which have no known use and as a consequence are normally evaporated in ponds. The present invention takes advantage of their high content of bioactive compounds originating from the fermentation of olives, such as polyphenols (mainly oleuropein, maslinic acid, hydroxytyrosol, and tyrosol), proteins, amino acids, vitamins, mineral salts, and antioxidants of plant origin, and also their low carbohydrate content, for the production of a novel culinary sauce having novel nutritional and organoleptic characteristics.

Its novel composition means that the culinary sauce of the present invention doesn't merely have advantages over traditional soy sauce associated with not containing soya and wheat (such as a lower sodium content, lower allergenic potential, and less environmental impact). The fermented sauce of the invention also has advantages over the fermented sauce of Spanish patent ES2933106 associated with not containing chickpeas or rice, such as a lower carbohydrate content.

In this document, the term *"olive fermentation brine"* is understood as meaning the solution of food-grade salt in drinking water used as a means of covering the table olives once they have been fermented. The fermentation brine is thus not the initial brine that is added to the olives, but the resulting brine after the fermentation process has been completed.

In this document, the term *"food-grade salt"* is understood as meaning the crystalline product consisting predominantly of sodium chloride, where the NaCl content must be not less than 97% by weight of dry matter, excluding additives.

In this document, the term *"olive"* is understood as meaning the fruit of the olive tree obtained in the appropriate state of maturity and of a quality such that, after undergoing the appropriate processing, it provides a product ready for human consumption and having a long shelf life. These fruits are treated (*"cured*") with an alkaline solution of sodium hydroxide, followed by washing with water, and then placed in a brine where they undergo lactic fermentation. The curing procedure causes hydrolysis of the oleuropein that is responsible for the bitterness of the olives, fostering, after washing with water to remove the excess NaOH and thereby reduce the combined acidity, the development in the brines a few days later of a microbial population of lactic acid bacteria and yeasts that persists until the end of the fermentation and provides the highly valued and unique characteristics of Spanish-style green olives.

In this document, the term *"combined acidity"* is understood as referring to the residual alkali (NaOH) provided by fruits that have undergone a *"curing"* process and that is released by the fruits into the fermentation brine, determining the buffering capacity of said brine when combined with organic acids. It is determined by titration to pH 2.6 with hydrochloric acid solution and is expressed as normality (N).

A first aspect of the present invention is directed to a method for obtaining a novel culinary sauce similar to soy sauce from green olive fermentation brine, preferably treated with alkali (NaOH), as claimed in claim 1. The dependent claims describe optional features.

### PREFERRED EMBODIMENT OF THE INVENTION

The method designed by the inventors of the present application for producing the novel culinary sauce from green olive fermentation brine is described in detail below.

The method starts from a fermentation brine that must have a number of specific characteristics without which it is not possible to obtain a novel culinary sauce with similarities to soy sauce. In particular, the green olive fermentation brine that is the basis for the method of the invention must have fermented green olives for a long period of time of, for example, more than 3 months, must contain lactic acid bacteria (preferably in population levels of greater than 10³-10⁶ cfu/mL), and must have a salt content of between 6.5-8.5%, a pH of between 3.7-4.3, a free acidity of 1.0-1.3%, and a combined acidity of 0.10-0.25 N.

It is important that the fermentation brine comes from fermenting good quality green olives, since the use of fermentation brine from other types of olives, for example olives intended for an oxidized black olive production process, is not acceptable. Specifically, the inventors of the present application have found that the fermentation brine of Seville-style green olives, preferably of the hojiblanca or manzanilla varieties, is particularly advantageous on account of its high content of phenols. A high content of phenols is associated with a higher nutritional value on account of its antioxidant capacity. Very preferably, the brine comes from the fermentation of green olives treated with alkali (NaOH), since these are also the ones having the least bitterness. In any case, it would be possible to carry out the method of the invention starting from fermentation brines of green olives of other varieties, such as aloreña, cacereña or others.

The brine must have fermented the green olives for a long period of time of, for example, at least 3 months, more preferably for 3-18 months. Sufficiently long fermentation times ensure the transfer to the brine of substances originally present in the olives, such as proteins, amino acids, vitamins, mineral salts, and plant antioxidants, as well as other bioactive components. This greatly contributes to improving the nutritional and organoleptic characteristics of the fermented sauce of the invention.

In addition, it is necessary for the fermentation brine to contain lactic acid bacteria, preferably of the genus *Lactiplantibacillus*/*Lactobacillus,* and also yeasts. In the conventional process for the fermentation of table olives, it is common to add inocula and/or starter cultures of lactic acid bacteria and yeasts with probiotic potential. The lactic acid bacteria present in green olive brine play a key role in the fermentation process of the olives and can provide a range of benefits aimed both at preserving the final product and improving its quality. Some of the benefits of these lactic acid bacteria are described below:
- Fermentation and preservation: Lactic acid bacteria help to ferment the olives, converting sugars into lactic acid, which is a key step in the preservation of these fruits. During fermentation, and due to the production of lactic acid, the pH of the brine is reduced to a value below pH 4.3. This creates an acidic environment that inhibits the growth of pathogenic and spoilage microorganisms and helps preserve the olives over long periods of time.
- Taste and texture: The fermentation carried out by the lactic acid bacteria and yeasts can improve the taste and texture of the green olives. These microorganisms help transform bitter and astringent compounds (for example oleuropein) into compounds that are more palatable, through their esterase and β-glucosidase activity.
- Flavor development: Lactic acid bacteria and yeasts can contribute to the production of aromatic compounds and an agreeable taste in the olives. This can result in olives having a more complex and appealing taste profile and preservation brines having excellent physicochemical and organoleptic properties.
- Nutritional composition: The fermentation of olives by lactic acid bacteria can increase the bioavailability of certain nutrients, such as minerals, on account of their phytase activity. In addition, it can contribute to the production of bioactive compounds that have beneficial health effects (for example hydroxytyrosol and maslinic acid, inter alia).

In addition, the tests performed by the inventors of the present application have demonstrated that, in order to obtain the fermented sauce of the invention, it is necessary for the fermentation brine employed as raw material to have particular characteristics, specifically a salt content of between 6.5-8.5%, a pH of between 3.7-4.3, a free acidity of 1.0-1.3%, and a combined acidity of 0.10-0.25 N.

Using olive brine having these characteristics is advantageous because it ensures the absence of spoilage microorganisms (*Propionibacteria, Pseudomonas,* etc.) and pathogens (*Clostridium, Listeria, Staphylococcus,* etc.), free of bad odors and tastes, but at the same time having a salt concentration and free acidity high enough for the culinary use for which it is intended.

Starting from a brine having these characteristics, the novel culinary sauce of the present invention is obtained by the following steps:
1. Filtering the fermentation brine to remove impurities, such as pieces of olive, pits, and the like.
   The filtration step may be carried out in any way known in the art, the term *"filtration"* including any other means by which such impurities may be removed, for example decantation or other methods.
2. Adding powdered yeast extracts to provide a *umami* taste.
   Yeast extract contains inter alia compounds rich in glutamic acid, which, when combined with sodium (present in the preservation brine of the olives), allows the formation of monosodium glutamate, the sodium salt of glutamic acid, which helps bring out the *umami* taste. Adding yeast extract makes it possible to enhance the overall taste of foods and to give them a fuller and richer taste profile. In addition, the yeast extract also provides other nutritionally beneficial components, such as B group vitamins, amino acids, and other growth factors.
   The yeast extract preferably contains at least one of the following: glutamic acid, inosinate, or disodium guanylate. Powdered yeast extracts can in fact have characteristics that vary from one extract to the next, the principal differences being their content of sodium chloride and percentage of glutamic acid, inosinate, and disodium guanylate. These substances are the principal umami substances and it has also been scientifically proven that inosinate or guanylate dramatically improve the umami taste of glutamate. This is known as umami synergy. In the product that is the object of the invention, the aim is to employ yeast extracts that provide the highest content of glutamic acid, inosinate, and disodium guanylate, since these are the substances that enhance taste in a food and do not interfere by masking the original taste of the olive brine.
   For the purposes of ensuring homogenization of the mixture (brine + yeast extract) and preventing lumps from forming, the method of the invention preferably further comprises a first stirring after the addition of the powdered yeast extracts. To improve the result of the first stirring, this step may also include heating to a temperature of between 45-65°C. These steps are of vital importance in order to prevent the product from separating and settling in the container, which would be unacceptable to the consumer. The dissolution temperature of the yeast extract depends on various factors such as the concentration of the extract and the product requirements. The application of heat accelerates the dissolution process of the product, decreases the undesired microbial load, and improves the stability of the extract.
3. Adding plant extracts to obtain a color and viscosity similar to soy sauce.
   The addition of plant extracts can also help provide antioxidants, improve nutritional quality, and add taste to the products. The result is that the sauce of the invention acquires a color/viscosity very similar to that of traditional soy sauce.
   To ensure homogenization of the mixture, after the addition of the plant extracts it is preferable that the method of the invention comprises a second stirring for 5-20 minutes so as to achieve a homogeneous color.
4. Adding a thickener to prevent the powdered yeast extract from separating from the rest of the brine.
   In principle, any suitable thickener may be used, although preference is given to using guar gum or xanthan gum. This thickener will in addition provide the sauce of the invention with a texture/smoothness similar to that of traditional soy sauce.
   Again, in order to ensure homogeneous mixing, after the addition of the thickener it is preferable to carry out a third stirring of the fermentation brine that facilitates its dispersion or dissolution. This third stirring can be combined with heating to a temperature of between 55-65°C, which makes it easier for the thickener to dissolve.
5. Bottling of the resulting fermented sauce.
   The bottling process may be carried out in any way known in the art. For example, bottling may be performed at a temperature of between 55°C and 65°C.
   The bottling may also include a final pasteurization step. Pasteurization is normally the best option for eliminating possible spoilage and pathogenic species that may be present in the product and also for prolonging the commercial shelf life of same. For example, pasteurization may be carried out at a temperature of between 75-85°C for 10-20 minutes.

The described process makes it possible to obtain a gluten-free culinary sauce having the following composition per 100 grams:
- 6000-9000 milligrams of sodium chloride
- 1-10 grams of carbohydrates
- 10-20 kcal
- bioactive compounds such as oleuropein, maslinic acid, tyrosol and/or hydroxytyrosol (250-1000 ppm).

## Claims

1. A method for producing a culinary sauce similar to soy sauce from green olive fermentation brine, **characterized in that** the employed fermentation brine contains lactic acid bacteria and yeast, a salt content of between 6.5-8.5%, a pH of between 3.7-4.3, a free acidity of 1.0-1.3%, and a combined acidity of 0.10-0.25 N, **and in that** it comprises at least the following steps:
- filtering the fermentation brine to remove impurities;
- adding powdered yeast extracts to provide a umami taste;
- adding plant extracts to obtain a color and smoothness similar to soy sauce;
- adding a thickener to prevent the powdered yeast extract from separating from the rest of the brine; and
- bottling of the resulting fermented sauce.

2. The method as claimed in claim 1, where the fermentation brine comes from the fermentation of green olives treated with alkali.

3. The method as claimed in any of the preceding claims, where the olive brine has been fermented for a period of between 3-18 months.

4. The method as claimed in any of the preceding claims, where the powdered yeast extract contains at least one of the following components: glutamic acid, inosinate or disodium guanylate.

5. The method as claimed in any of the preceding claims, further comprising a first stirring after the addition of the powdered yeast extracts, so as to ensure homogenization and prevent lumps from forming.

6. The method as claimed in claim 5, further comprising a step of heating to a temperature of between 45-65°C during the first stirring.

7. The method as claimed in any of the preceding claims, further comprising a second stirring for 5-20 minutes after the addition of the plant extracts, so as to achieve a homogeneous color.

8. The method as claimed in any of the preceding claims, where the thickener is selected from guar gum or xanthan gum.

9. The method as claimed in any of the preceding claims, further comprising a third stirring of the fermentation brine after the addition of the thickener.

10. The method as claimed in claim 9, further comprising a step of heating to a temperature of between 55-65°C during the third stirring.

11. The method as claimed in any of the preceding claims, where the bottling step is performed at a temperature of between 55°C and 65°C.

12. The method as claimed in any of the preceding claims, further comprising a final pasteurization step.

13. The method as claimed in claim 12, where pasteurization is carried out at a temperature of between 75-85°C for 10-20 minutes.
